# EUROPEAN PATENT APPLICATION

(11) **EP 1 645 965 A2**
(43) Date of publication of application: **12.04.2006**
(21) Application number: 05021443.6
(22) Date of filing: 30.09.2005
(51) Int. Cl.: G06F 12/06

(54) **Method and system for automatic addressing of a plurality of elements which communicate by means of a single bus**

(30) Priority: 11.10.2004 IT MO20040267
(71) Applicant: Meta System S.p.A., 42100 Reggio Emilia (IT)
(72) Inventor: Simonazzi, Giuseppe, 42100 Reggio Emilia (IT)
(74) Representative: Alagem Modiano, Lara S.

(57) **Abstract**

A method for the automatic addressing of elements connected to a control unit by means of a single bus and comprising a switch suitable to manage the connection to the power supply of a subsequent adjacent element, the method comprising the steps of sending over the bus a command so that the elements send in response an identification signal toward the control unit; receiving from an element a signal that corresponds to the "unassigned address" state; sending over the bus (3) a command to assume an identification address; and assuming, on the part of the element that sent the "unassigned address" state signal, the identification address and closing the switch for connection to the subsequent element.

## Description

The present invention relates to a method for the automatic addressing of a plurality of elements, such as operative elements, connected by means of a single bus, and to a system for implementing the method.

In the field of the network management of a plurality of elements, such as for example sensors, it is often necessary for the individual elements to differentiate each other for example by means of a particular network address or a given identification code.

The control unit that manages the individual elements must in fact be able to communicate selectively with the individual elements in order to send different commands to them depending on the element or exchange information whose origin must be known.

This requirement is observed in various fields, for example in the domestic field, in which systems of this type are used to implement alarm systems in which a control unit manages a plurality of motion sensors, or heating systems in which the thermostats are referred to a plurality of heat sensors. In this second case, for example, it is important to identify which sensor is detecting a temperature above or below the required one in order to drive selectively the corresponding heat sources.

In another exemplifying field of application, these systems are used to detect obstacles in systems aimed at facilitating the parking of cars, in which it is necessary to identify the sensor that lies closest to the obstacle and accordingly identify the position of the obstacle more precisely.

Methods for addressing sensors to be connected in a network which provide, during production, a different programming for each individual element are already known in the background art. The sensors thus programmed are mutually distinguished by means of their respective encoding even before they are installed in a network.

However, the logistic management and differentiated assembly of the individual mutually different elements assumes a high degree of complexity, consequently leading to substantial costs. Moreover, in order to avoid errors during the network assembly of the sensors, these sensors are usually manufactured so as to differentiate themselves aesthetically as well, for example by means of different colors, and thus be distinguishable also to the naked eye. This method entails additional material and production costs and can count on any effects of scale only to a limited extent.

Another known method implements, in the elements and in the control unit for managing the elements, a device that is capable of detecting a variation of absorbed current at the instant when an additional element is connected. This allows the control unit to receive information regarding the presence of a new element and consequently perform its addressing.

Although this method solves the problem of high production, assembly and logistic costs, its correct operation requires additional elements that indicate the presence of a new element and thus start automatic addressing on the part of the control unit.

Finally, it is known to implement in the connector additional pins, which are connected appropriately in order to indicate to the element its position in the network and perform addressing in this way. This method requires complex and expensive wiring and further requires the elements to have connectors with a large number of pins.

The aim of the present invention is to eliminate the drawbacks described above in known types of method and system for addressing elements connected in a network by means of a single bus, by providing an automatic addressing system which requires a limited number of electronic components for its operation.

Within this aim, an object of the present invention is to provide an automatic addressing system that does not require complex wiring.

Another object of the present invention is to provide an automatic addressing method that is capable of working both during the first activation of the system and during subsequent steps, such as for example after the replacement of a single element of the network.

Another object of the present invention is to provide an automatic addressing method that works with low production and management costs both for the manufacturer of the elements and for the customer during element assembly.

This aim and these and other objects, which will become better apparent from the description that follows, are achieved by an automatic addressing system, which comprises a control unit and a plurality of elements, said elements being connected to the control unit by means of a single bus, said system being characterized in that said elements comprise a switch which is capable of managing the connection to the power supply of a subsequent adjacent element.

Conveniently, the control unit comprises means for generating and sending to the elements a signal requesting the identification of an element and an identification address of an element.

Advantageously, each one of the elements comprises memory means, which are suitable to contain information related to its own address or to an "unassigned address" state.

The proposed aim and objects are also achieved by a method for the automatic addressing of elements connected to a control unit by means of a single bus and comprising a switch capable of managing the connection to the power supply of a subsequent adjacent element, wherein the method comprises the steps of sending over said bus a command to make said elements send in reply an identification signal toward the control unit; receiving from an element a signal that corresponds to the "unassigned address" state; sending over said bus a command to assume an identification address; and, on the part of said element that sent the "unassigned address" state signal, assuming said identification address and closing said switch for connection to the subsequent element.

Advantageously, the method is repeated until no signal that corresponds to the "unassigned address "state is received.

Further characteristics and advantages of the invention will become better apparent from the following detailed description of a preferred but not exclusive embodiment of the automatic addressing system, illustrated by way of non-limiting example in the accompanying drawings, wherein:
Figure 1 is a schematic view of the architecture of the system according to the invention;
Figure 2 is a more detailed schematic view of the elements of the system of Figure 1;

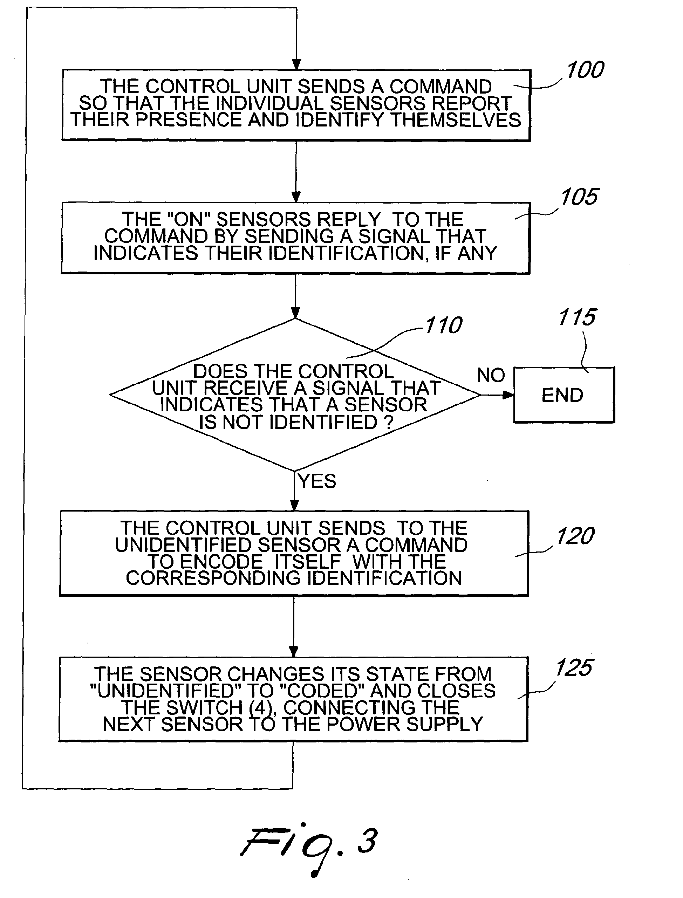

Figure 3 is a block diagram illustrating the management of each individual element.

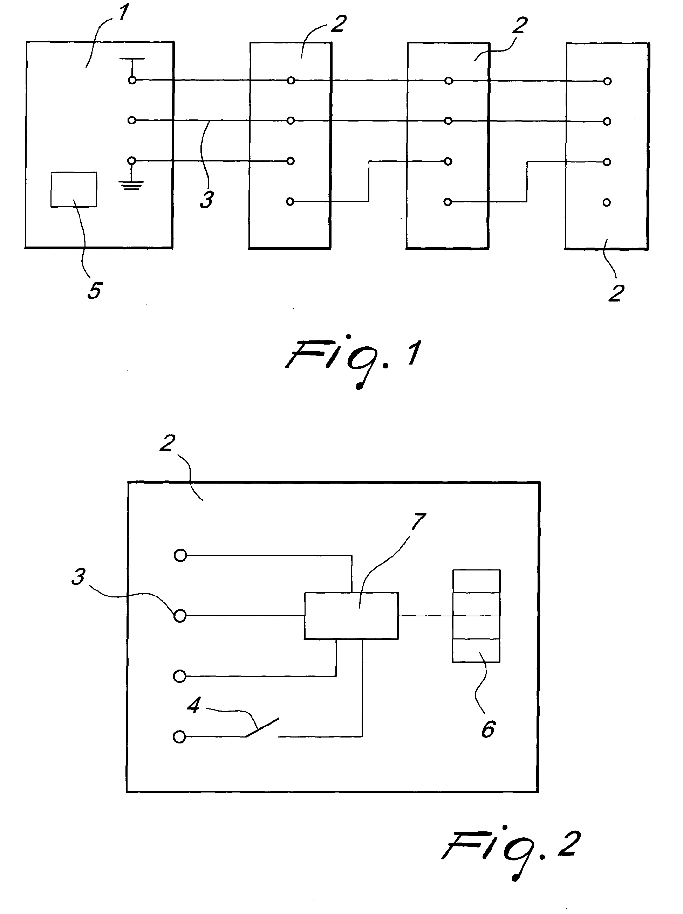

As shown schematically in Figure 1, the automatic addressing system comprises a control unit 1, which is suitable to manage a variable number of operative elements 2, for example sensors, which are connected to the control unit 1 by means of a bus 3.

The control unit 1 comprises generation means 5 for generating and sending to the elements 2 an identification request signal. Moreover, the control unit 1 is capable of assigning an identification address to the element 2 that has identified itself with the "unassigned address" state.

The elements 2 comprise memory means 6 for storing their own identification address or, if no address has been assigned to the element, for storing the "unassigned address" state. Further, the elements 2 comprise a processing unit 7, which manages the return of a signal in response to the identification request signal on the part of the controller 1, which corresponds to its own identification address or, if said address is not present, to its "unassigned address" state.

Furthermore, the processing means 7 manage the storage of the identification address sent by the control unit in said memory means 6.

Finally, each element 2 comprises a switch 4, which allows, in the closed position, the connection to the power supply of the subsequent element. Closure of the switch 4 is also managed by the processing means 7.

The operation of the system according to the invention during first activation is as follows.

In the initial state, all the elements 2 are in the "unassigned address" state.

The control unit 1, in order to be able to communicate selectively with all the elements 2, selects and associates in succession an identification address with each one of said elements, said address identifying the position of each element in the circuit. This allows the control unit 1 to send and receive messages and/or commands toward the individual elements 2 selectively.

For this purpose, the control unit 1 sends to the elements 2, by way of the means 5, a command which invites them to report their presence (step 100).

Since the elements 2 do not yet have an identification address, they have not activated their internal switch 4, and therefore only the element 2 that lies closest to the control unit 1 is connected to the power supply and is therefore capable of replying to the command.

In response to the commands, the first element 2 sends a signal which indicates its "unassigned address" state (step 105), and the control unit responds to this signal by sending a command to assume a particular identification address (step 120) such as for example "sensor 1".

Once an identification address has been assumed, the processing means 7 of the element 2 close the switch 4, thus supplying power to the subsequent adjacent element 2 (step 125).

The sequence of commands is repeated as many times as there are elements 2 on the circuit, i.e., until in step 110 no signal indicating the presence of an element without an address is received.

When this circumstance occurs, the addressing procedure ends (step 115), since each element 2 can be identified and can be polled by the control unit 1 directly. By doing so, the control unit 1 can activate the elements 2 selectively or according to any activation sequences. Further, the data that arrive from the elements 2, such as for example the data acquired by means of a sensor, can be attributed to the specific element 2, i.e., in the example, to the specific sensor.

If it is necessary to replace one or more elements 2 in a system in which initial addressing has already occurred, the location of the replaced element is determined automatically according to an operation that is similar to the operation of the first activation step.

When the system is activated, the control unit 1 receives a presence reply only from the elements 2 that lie closest to it up to the replaced element (not shown), which returns a signal that characterizes its "unassigned address" state.

The remaining elements 2 instead do not report their presence. Since the replaced element 2 cannot be identified, the corresponding internal switch 4 is open and therefore the elements 2 that are arranged downstream of it are not supplied with power.

The control unit 1 then assigns an identification address to the unidentified element 2. Once such an identification address has been received and stored in the memory means 6, the replaced element 2 closes, by virtue of the processing means 7, its internal switch 4 and thus connects the elements 2 downstream of the power supply. At a subsequent request for presence of the elements 2, the controller thus receives from all the elements a reply that indicates the corresponding identification addresses.

It has thus been shown that the described method and system achieve the intended aim and objects. In particular, it has been shown that the system thus conceived allows to overcome the limitations of the background art, since it does not require, for its operation, additional devices suitable to report the presence on the network of new elements or of complicated wiring.

Further, the system thus conceived is capable of operating both during the first activation of the system and during subsequent steps, such as for example after the replacement of an individual element of the circuit, in a fully automatic manner.

Moreover, it has been shown that the method can be implemented by using elements that are not pre-coded, introducing a consequent reduction in the production costs of said elements and a reduction in installation labor costs.

Clearly, numerous modifications are evident and can be performed promptly by the person skilled in the art without abandoning the scope of the protection of the appended claims. For example, it is obvious for the person skilled in the art that the switch of the sensor can be provided in any manner, for example by means of any type of transistor.

Therefore, the scope of the protection of the claims must not be limited by the illustrations or by the preferred embodiments given in the description by way of example, but rather the claims must comprise all the characteristics of patentable novelty that reside within the present invention, including all the characteristics that would be treated as equivalent by the person skilled in the art.

The disclosures in Italian Patent Application No. M02004A000267 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An automatic addressing system, comprising a control unit (1) and a plurality of elements (2), said elements (2) being connected to said control unit (1) by means of a single bus (3), said system being **characterized in that** said elements (2) comprise a switch (4) which is capable of managing the connection to the power supply of a subsequent adjacent element (2).

2. The system according to claim 1, **characterized in that** said control unit (1) comprises means (5) for generating and sending to said elements (2):
a) a signal requesting identification of an element (2);
b) an address that identifies an element (2).

3. The system according to claim 2, **characterized in that** each one of said elements (2) comprises memory means (6), which are suitable to contain information related to its own address or to an "unassigned address" state.

4. The system according to claim 3, **characterized in that** each one of said elements (2) comprises processing means (7), which are suitable to return an "unassigned address" signal in reply to said identification request signal when said memory means (6) do not contain an identification address.

5. The system according to claim 4, **characterized in that** said processing means (7) of said elements (2) are suitable to store in said memory means (6) said address sent by said control unit (1), if said memory means (6) indicate an "unassigned address".

6. The system according to claim 5, **characterized in that** said processing means (7) of said elements (2) are suitable to close said switch (4) after storing an address.

7. A method for the automatic addressing of elements (2) connected to a control unit (1) by means of a single bus (3) and comprising a switch (4) suitable to manage the connection to the power supply of a subsequent adjacent element (2), said method comprising the steps of:
a) sending over said bus (3) a command so that said elements (2) send in response an identification signal toward the control unit (1);
b) receiving from an element (2) a signal that corresponds to the "unassigned address" state;
c) sending over said bus (3) a command to assume an identification address;
d) assuming, on the part of said element (2) that sent the "unassigned address" state signal, said identification address and closing said switch (4) for connection to the subsequent element (2).

8. The method according to claim 7, **characterized in that** steps a), b), c) and d) are performed until no signal that corresponds to the "unassigned address" state is received.
